# EUROPÄISCHE PATENTSCHRIFT

(11) **EP 2 100 750 B1**
(45) Veröffentlichungstag und Bekanntmachung des Hinweises auf die Patenterteilung: **30.11.2011**
(21) Anmeldenummer: 09000754.3
(22) Anmeldetag: 21.01.2009
(51) Int. Cl.: B60B 3/14, F16B 39/04

(54) **Sicherungsvorrichtung für Zentralmuttern von Radbefestigungen**
Center lock device for wheel
Dispositif de sécurisation pour des écrous centraux de fixations de roues

(30) Priorität: 12.03.2008 DE 102008013914
(43) Veröffentlichungstag der Anmeldung: 16.09.2009
(73) Patentinhaber: Audi AG, 85045 Ingolstadt (DE)
(72) Erfinder: Hobohm, Jörg, 85110 Kipfenberg (DE); Appel, Wolfgang, 85120 Hepberg (DE)
(74) Vertreter: Asch, Konrad

(56) Entgegenhaltungen:
- WO-A1-03/072963
- DE-U1- 29 823 594
- US-A- 3 712 356
- US-A- 5 211 448

## Beschreibung

Die Erfindung betrifft eine Sicherungsvorrichtung für Zentralmuttern von Radbefestigungen, insbesondere für Wettbewerbsfahrzeuge, gemäß dem Oberbegriff des Patentanspruches 1.

Eine Sicherungsvorrichtung der gattungsgemäßen Art zeigt beispielsweise die EP 1 478 862 B1. Dabei sind zwei diametral gegenüberliegende und radial verschiebbare Sicherungsbolzen vorgesehen, die die Zentralmutter nach deren Befestigung bei der Radmontage gegen Lösen sichern, wobei sie an der freien Stirnseite der Zentralmutter anliegen. Bei einer Demontage des Rades werden mittels der Stecknuss des Montagewerkzeuges zunächst die Sicherungsbolzen nach innen verlagert und danach die Zentralmutter gelöst. Vorteilhaft ist dabei, dass die Betätigung der Sicherungsbolzen bei der Demontage oder Montage des Rades automatisch über die Stecknuss erfolgt.

Aufgabe der Erfindung ist es, eine Sicherungsvorrichtung der gattungsgemäßen Art vorzuschlagen, die bei unverändert einfacher Betätigung eine weiter verbesserte Sicherung der Radbefestigung bietet.

Diese Aufgabe wird erfindungsgemäß mit den kennzeichnenden Merkmalen des Patentanspruches 1 gelöst. Vorteilhafte Weiterbildungen der Erfindung beinhalten die weiteren Patentansprüche.

Erfindungsgemäß wird vorgeschlagen, dass in dem Führungsteil mit dem Sicherungsbolzen zusammenwirkende Sperrmittel vorgesehen sind, die ein radial nach innen Verschieben des Sicherungsbolzens blockieren und die nur bei aufgesteckter Stecknuss des Montagewerkzeuges den Sicherungsbolzen freigeben können. Damit ist ohne zusätzlichen Montageaufwand eine formschlüssig wirkende Verriegelung des zumindest einen Sicherungsbolzens geschaffen, die auch bei höchsten Belastungen und unter ungünstigsten Betriebsbedingungen sicherstellt, dass die Sicherungsbolzen in ihrer Verriegelungsstellung verharren und ein unbeabsichtigtes Lösen der Zentralmutter ausschließen.

Die Sperrmittel können bevorzugt durch einen Sperrschieber gebildet sein, der quer zum Sicherungsbolzen in dem Führungsteil verschiebbar ist und der den zumindest einen Sicherungsbolzen in der ausgefahrenen Stellung hintergreift. Dies ergibt eine baulich günstige und funktionell besonders robuste Konstruktion der Sicherungsvorrichtung.

Des Weiteren kann auch der Sperrschieber mit einer Führungsnase durch eine weitere Ausnehmung in der Radnabe hindurch ragen und mit seiner nockenförmigen Stirnseite mit der Stecknuss des Montagewerkzeuges zusammenwirken, wobei der Sperrschieber mittels einer Druckfeder radial nach außen vorgespannt ist. Dies stellt eine besonders einfache Betätigung auch des Sperrschiebers über die Stecknuss sicher.

In an sich bekannter Weise können zwei Sicherungsbolzen diametral gegenüber liegend vorgesehen sein, wobei in dem dazwischen positionierten Sperrschieber ein langlochförmiger Durchbruch eingearbeitet ist, in den die Sicherungsbolzen bei entriegelter Stellung des Sperrschiebers einfahrbar sind, während sie in der Verriegelungsstellung an Randbereichen des Sperrschiebers anliegen. Damit sind die Sicherungsbolzen baulich besonders vorteilhaft in den Sperrschieber integriert bzw. bilden mit diesem eine Funktioneinheit.

Die mit der Stecknuss des Montagewerkzeuges zusammenwirkenden Führungsnasen der Sicherungsbolzen und des Sperrschiebers sind bevorzugt so ausgerichtet, dass bei Aufstecken der Stecknuss vor einem Drehschluss mit der Zentralmutter zuerst der Sperrschieber und dann der Sicherungsbolzen radial nach innen in Entriegelungsstellung verlagert werden. Danach stellt sich der Drehschluss mit der Zentralmutter her und diese kann gelöst oder angezogen werden.

In hinsichtlich des Fertigungsaufwandes und des Montageaufwandes besonders günstiger Weise kann das Führungsteil durch eine in den rohrförmigen Außenabschnitt der Radnabe einsetzbare und diese nach außen verschließbare, topfförmige Verschlusskappe gebildet sein. Die Verschlusskappe kann mit der Sicherungsvorrichtung als Vormontageeinheit hergestellt und einfach montiert werden.

Dabei können ferner die Sicherungsbolzen und der Sperrschieber unmittelbar in der Verschlusskappe verschiebbar geführt sein und mit ihren Führungsnasen die mit größerem Umfangsspiel ausgeführten Ausnehmungen in der Radnabe durchragen. Neben einer vereinfachten Montage hat diese Ausbildung den Vorteil, dass ggf. im Betrieb auftretender Verschleiß zwischen den Sicherungsbolzen und deren Führungen von der Radnabe bzw. deren Ausnehmungen ferngehalten ist.

Schließlich kann zur Erzielung einer besonders einfachen und schnellen Montage die Verschlusskappe an ihrem Außenumfang mittels mehrerer umfangsversetzter, federnd nach außen vorgespannter Arretierzapfen in korrespondierenden Ausnehmungen in der Radnabe gehalten sein, bzw. als einfache Steckverbindung ausgeführt sein.

Ein Ausführungsbeispiel der Erfindung ist im Folgenden mit weiteren Einzelheiten näher erläutert. Die schematische Zeichnung zeigt in:
- Fig. 1: eine raumbildliche Ansicht auf eine Radbefestigung eines Wettbe- werbsfahrzeuges, mit einer Radnabe, einer Zentralmutter und einer in einer Verschlusskappe integrierten Sicherungsvorrichtung;
- Fig. 2: die Radbefestigung nach Fig. 1 in der gleichen raumbildlichen Dar- stellung, in der aus Gründen der Übersichtlichkeit der Sperrmecha- nismus mit weggelassener Verschlusskappe gezeigt ist;
- Fig. 3: die Verschlusskappe gemäß den Fig. 1 und 2 mit integrierter Siche- rungsvorrichtung, in einer Explosionsdarstellung der Einzelteile; und
- Fig. 4: einen teilweisen Längsschnitt durch die Radnabe mit aufgeschraubter Zentralmutter, der Sicherungsvorrichtung und der Stecknuss des Mon- tagewerkzeuges.

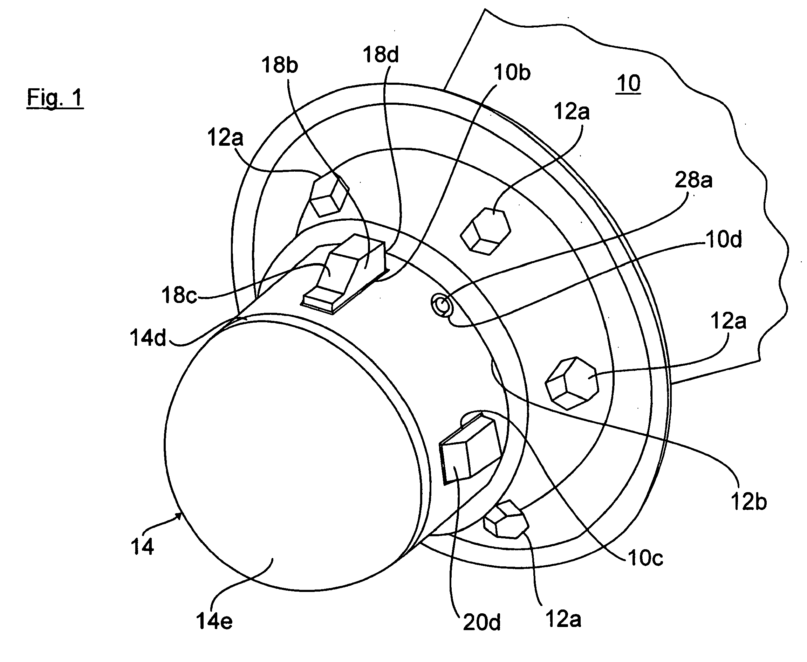

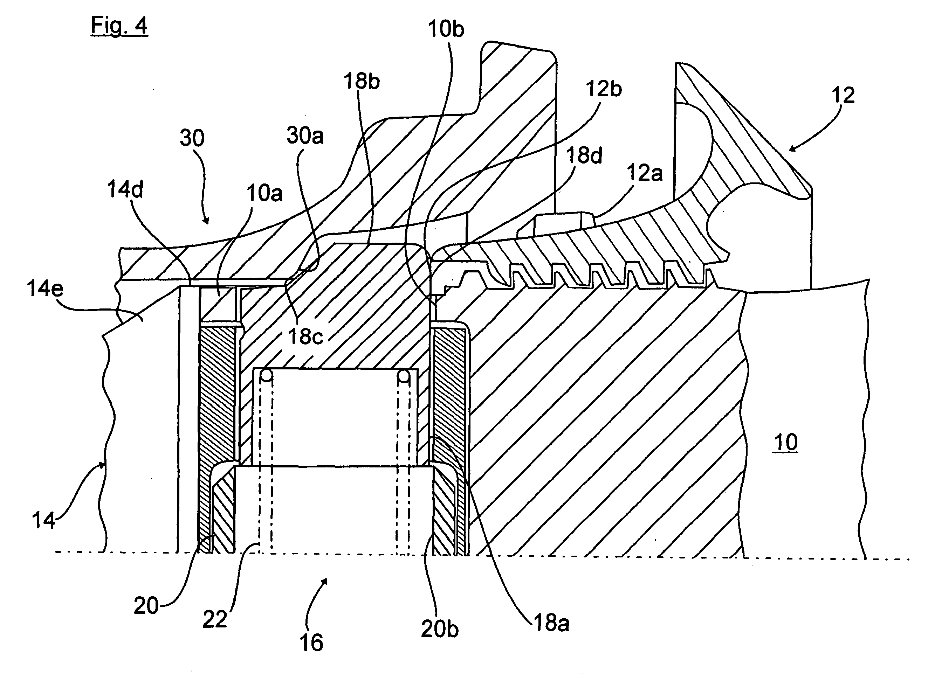

Die Fig. 1 zeigt die Radnabe 10 einer Antriebsachse eines Wettbewerbsfahrzeuges, auf der die Nabe eines Rades (nicht dargestellt) über eine Mitnehmerverzahnung verdrehfest aufsteckbar ist. Die besagte Nabe ist mittels einer ringförmigen Zentralmutter 12 befestigbar, die auf die Radnabe 10 aufschraubbar ist. Zum Betätigen der Zentralmutter 12 weist diese umfangsversetzte Mitnehmerzapfen 12a auf, die mit korrespondierenden Ausnehmungen in einer Stecknuss 30 (Fig. 4) eines mit Druckluft betriebenen Montagewerkzeuges zusammenwirkt.

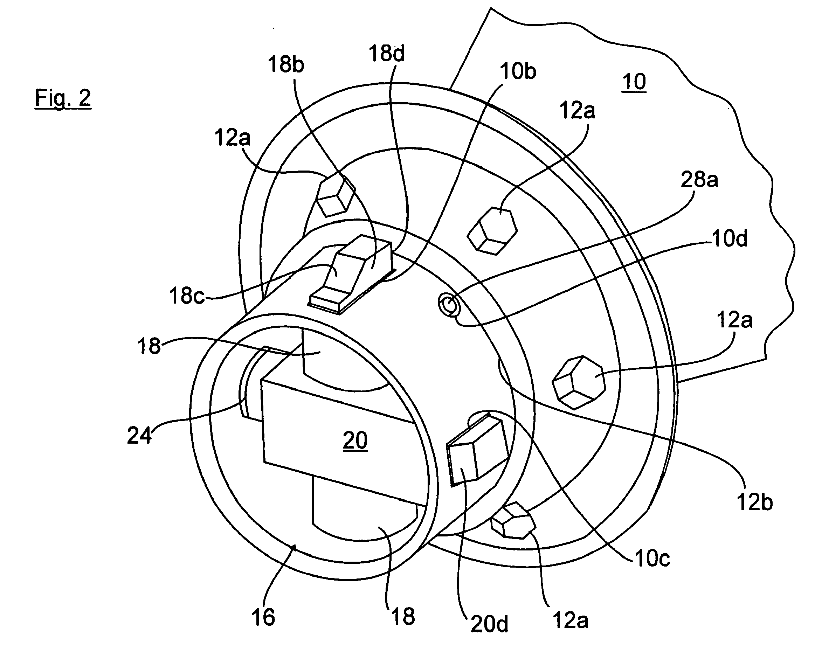

In den rohrförmigen Außenabschnitt 10a der Radnabe 10 ist eine topfförmige Verschlusskappe 14 eingesetzt, in die eine Sicherungsvorrichtung 16 (vgl. Fig. 2 bis 4) integriert ist. Die Verschlusskappe 14 ist mit Stirnwänden 14e, 14f als geschlossenes Bauteil aus Stahl hergestellt, wobei die äußere Stirnwand 14e sphärisch ausgeführt ist.

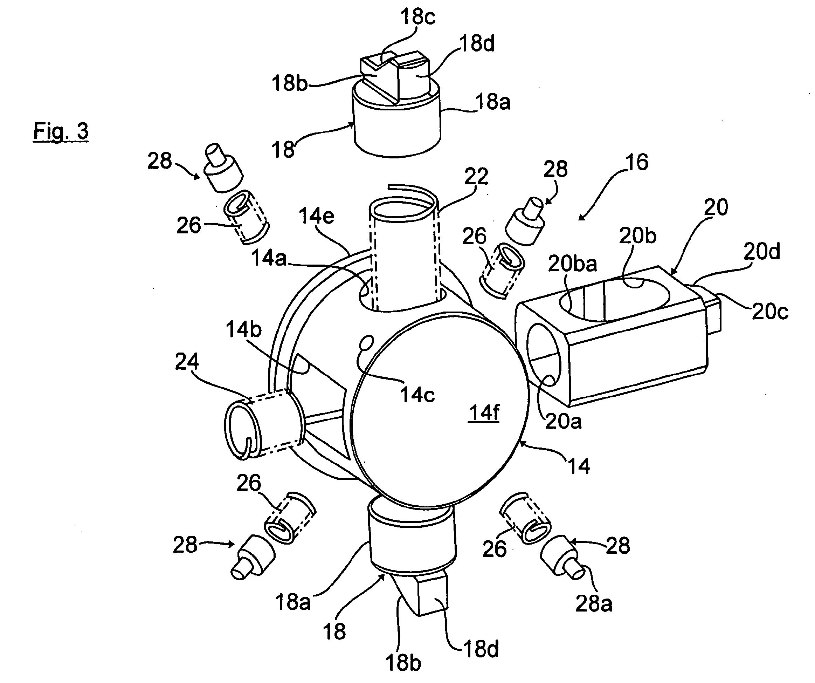

Die Sicherungsvorrichtung 16 setzt sich im Wesentlichen zusammen aus zwei diametral gegenüber liegenden Sicherungsbolzen 18 und einem Sperrschieber 20, die in der Verschlusskappe 14 verschiebbar geführt sind und mittels Druckfedern 22, 24 radial nach außen vorgespannt sind (vgl. insbesondere Fig. 3).

Dazu weist die Verschlusskappe 14 eine Querbohrung 14a auf, in der rotationssymmetrische, hülsenförmige Abschnitte 18a der Sicherungsbolzen 18 geführt sind. In diesen hülsenförmigen Abschnitten 18a ist ferner die gemeinsame Druckfeder 22 aufgenommen.

Die Sicherungsbolzen 18 bzw. deren hülsenförmige Abschnitte 18a tragen radial außenliegend und sich in axialer Richtung erstreckend Führungsnasen 18b, die im montierten Zustand an dem Außenabschnitt 10a der Radnabe 10 durch etwa rechteckförmige Ausnehmungen 10b hindurchragen (Fig. 2).

Der quer zu den beiden Sicherungsbolzen 18 in einer entsprechend angepassten Ausnehmung 14b geführte, im Querschnitt etwa rechteckförmige Sperrschieber 20 weist eine Aufnahmebohrung 20a für die Druckfeder 24 und einen langlochförmigen Durchbruch 20b auf. Ferner trägt der Sperrschieber 20 eine radial abragende, etwa rechteckförmige und sich axial erstreckende Führungsnase 20c, die ebenfalls (Fig. 2) durch eine korrespondierende Ausnehmung 10c den Außenabschnitt 10a der Radnabe 10 durchragt.

Der langlochförmige Durchbruch 20b des Sperrschiebers 20 ist so ausgeführt, dass bei einer radial inneren Position des Sperrschiebers 20 die Querbohrung 14a der beiden Sicherungsbolzen 18 mit dem Durchbruch 20b fluchtet und somit die beiden Sicherungsbolzen 18 bzw. deren Abschnitte 18a in den Durchbruch 20b einfahren können.

In einer durch die Druckfeder 24 bewirkten radial äußeren Position des Sperrschiebers 20 überdeckt ein Randbereich 20ba des Durchbruches 20b die Querbohrung 14a; dementsprechend sind die Sicherungsbolzen 18 in ihrer radial äußeren Position gesperrt, können also nicht eingedrückt werden.

Die als geschlossenes Bauteil ausgeführte Verschlusskappe 14 (Fig. 2 und 3) weist vier umfangsversetzte Aufnahmebohrungen 14c auf, in die Druckfedern 26 und rotationssymmetrische Arretierzapfen 28 eingesetzt sind, deren im Durchmesser verringerte Außenabschnitte 28a bei der Montage der Verschlusskappe 14 in korrespondierende Bohrungen 10d der Radnabe 10 einrasten können.

Die Führungsnasen 18b der Sicherungsbolzen 18 und die Führungsnase 20c des Sperrschiebers 20 sind an ihren freien Stirnseiten mit schrägen Rampen 18c, 20d versehen, die in noch zu beschreibender Weise (Fig. 4) mit einer Ringschulter 30a am gestuft ausgeführten Innenumfang der Stecknuss 30 eines nicht weiter dargestellten Montagewerkzeuges zusammenwirken.

Zur Vormontage der Verschlusskappe 14 als Führungsteil und der Sicherungsvorrichtung 16 wird zunächst der Sperrschieber 20 durch die Ausnehmung 14b mit der Druckfeder 24 eingeschoben. Sodann werden die Druckfeder 22 und die Sicherungsbolzen 18 in die Querbohrung 14a eingeführt. Des Weiteren werden die Arretierzapfen 28 mit den Druckfedern 26 eingesetzt.

Schließlich kann durch Eindrücken der Bauteile 18, 20, 28 (z. B. mittels einer Spannmanschette ähnlich einer Kolbenringmontage auf Kolben von Brennkraftmaschinen) die Vormontageeinheit als Steckverbindung in den Außenabschnitt 10a der Radnabe eingeschoben und verrastet werden. Die Führungsnasen 18b, 20c fahren dabei durch die Vorspannkraft der Druckfedern 22, 24 in die entsprechenden Ausnehmungen 10b, 10c der Radnabe 10 ein. Die Ausnehmungen 10b, 10c sind mit größerem Umfangsspiel zu den Führungsnasen 18b, 20c hergestellt.

In der Sicherungsstellung für die Zentralmutter 12 liegen radial verlaufende Sperrflächen 18d der Sicherungsbolzen 18 an der freien Stirnfläche 12b der Zentralmutter 12 an und verhindern deren unbeabsichtigtes Lösen. Ferner blockiert der durch die Vorspannkraft der Druckfeder 24 ebenfalls radial ausgefahrene Sperrschieber 20 die Sicherungsbolzen 18 in deren ausgefahrener Position (aus Fig. 2 ersichtlich).

Die Fig. 4 zeigt zumindest teilweise das Zusammenwirken der Stecknuss 30 des Montagewerkzeuges bei einem Radwechsel.

Es sei angenommen, das Rad (nicht dargestellt) ist montiert und über die Zentralmutter 12 befestigt. Soll das Rad nunmehr demontiert werden, so wird die Stecknuss 30 auf die eine Vorzentrierung bildende Verschlusskappe 14 an deren äußeren Randbereich 14d aufgesetzt und weiter aufgeschoben.

Dabei läuft die besagte Innenschulter 30a der Stecknuss 30 zunächst an der schrägen Rampe 20d der Führungsnase 20c des Sperrschiebers 20 an und drückt den Sperrschieber 20 radial nach innen. Dadurch wird dessen Blockierwirkung auf die Sicherungsbolzen 18 aufgehoben.

Mit dem weiteren Aufschieben der Stecknuss 30 geraten auch die schrägen Rampen 18c der Führungsnasen 18b der beiden Sicherungsbolzen 18 mit der Innenschulter 30a in Wirkverbindung und werden ebenfalls radial nach innen verschoben, bis deren Sperrwirkung an der Zentralmutter 12 aufgehoben ist.

Mit dem weiteren Aufschieben der Stecknuss 30 gerät diese in Wirkverbindung mit den Mitnehmerzapfen 12a der Zentralmutter 12 und diese kann nun bei entsprechender Betätigung durch die Stecknuss 30 abgeschraubt werden.

Eine Montage des Rades auf der Radnabe 10 erfolgt in umgekehrter Reihenfolge; d. h., nach dem Anziehen der Zentralmutter 12 wird mit dem Abziehen der Stecknuss 30 automatisch die Sicherungsvorrichtung 16 mit den Sicherungsbolzen 18 und dem Sperrschieber 20 wieder aktiviert, wobei zunächst die Sicherungsbolzen 18 wieder ausfahren und anschließend der Sperrschieber 20 nach außen verschoben wird und die Sicherungsbolzen in deren Sperrstellung blockiert.

## Patentansprüche

1. Sicherungsvorrichtung für eine Zentralmutter (12) einer Radbefestigung, insbesondere für Wettbewerbsfahrzeuge, mit einer in einen rohrförmigen Außenabschnitt (10a) der Radnabe (10) einsteckbaren Führungsteil (14), in dem zumindest ein radial verschiebbarer Sicherungsbolzen (18) angeordnet ist, der durch eine Ausnehmung (10b) in der Radnabe (10) hindurch ragend mittels einer Druckfeder (22) nach außen vorgespannt ist, wobei der Sicherungsbolzen (18) bei aufgeschraubter Zentralmutter (12) deren ringförmige Stirnseite übergreift, **dadurch gekennzeichnet, dass** in dem Führungsteil (14) ein mit dem Sicherungsbolzen (18) zusammenwirkendes Sperrmittel (20) vorgesehen ist, das ein Verschieben des Sicherungsbolzens (18) nach innen blockiert.

2. Sicherungsvorrichtung nach Anspruch 1, **dadurch gekennzeichnet, dass** das Sperrmittel durch einen Sperrschieber (20) gebildet ist, der quer zum Sicherungsbolzen (18) in dem Führungsteil (14) verschiebbar ist und der den zumindest einen Sicherungsbolzen (18) in der ausgefahrenen Stellung hintergreift.

3. Sicherungsvorrichtung nach einem der Ansprüche 1 oder 2, **dadurch gekennzeichnet, dass** der Sperrschieber (20) mit einer Führungsnase (20c) durch eine weitere Ausnehmung (10c) in der Radnabe (10) hindurch ragt, und vorzugsweise der Sperrschieber (20) mittels einer Druckfeder (24) radial nach außen vorgespannt ist.

4. Sicherungsvorrichtung nach einem der vorhergehenden Ansprüche, **dadurch gekennzeichnet, dass** zwei Sicherungsbolzen (18) diametral gegenüber liegend vorgesehen sind und dass in dem dazwischen positionierten Sperrschieber (20) ein langlochförmiger Durchbruch (20b) eingearbeitet ist, in den die Sicherungsbolzen (18) bei entriegelter Stellung des Sperrschiebers (20) einfahrbar sind, während sie in der Verriegelungsstellung an Randbereichen (20ba) des Sperrschiebers (20) anliegen.

5. Sicherungsvorrichtung nach einem der vorhergehenden Ansprüche, **dadurch gekennzeichnet, dass** das Führungsteil durch eine in den rohrförmigen Außenabschnitt (10a) der Radnabe (10) einsetzbare und diese nach außen verschließbare Verschlusskappe (14) gebildet ist.

6. Sicherungsvorrichtung nach einem der vorhergehenden Ansprüche, **dadurch gekennzeichnet, dass** der Sicherungsbolzen (18) und/oder der Sperrschieber (20) unmittelbar im Führungsteil (14) verschiebbar geführt sind und mit ihren Führungsnasen (18b, 20c) die mit größerem Umfangsspiel ausgeführten Ausnehmungen (10b, 10c) in der Radnabe (10) durchragen.

7. Sicherungsvorrichtung nach Anspruch 5 oder 6, **dadurch gekennzeichnet, dass** die Verschlusskappe (14) an ihrem Außenumfang mittels mehrerer umfangsversetzter, federnd nach außen vorgespannter Arretierzapfen (28) in korrespondierenden Ausnehmungen (10d) in der Radnabe (10) gehalten ist.

8. Sicherungsvorrichtung nach einem der vorhergehenden Ansprüche, **dadurch gekennzeichnet, dass** eine freie Stirnseite (18c) des Sicherungsbolzens (18) derart rampenförmig ausgeführt ist, dass beim Aufschieben einer Stecknuss (30) eines Montagewerkzeuges der Sicherungsbolzen (18) entgegen der Kraft der Druckfeder (22) radial nach innen verschoben wird und die Zentralmutter (12) freigibt,

9. Sicherungsvorrichtung nach Anspruch 8, **dadurch gekennzeichnet, dass** das Sperrmittel (20) bei aufgesteckter Stecknuss (30) des Montagewerkzeuges den Sicherungsbolzen (18) freigibt.

10. Sicherungsvorrichtung nach einem der Ansprüche 3 bis 9, **dadurch gekennzeichnet, dass** die Führungsnase (20c) des Sperrschiebers (20) eine rampenförmige Stirnseite (20d) aufweist, die mit der Stecknuss (30) zusammenwirkt.

11. Sicherungsvorrichtung nach einem Anspruch 10, **dadurch gekennzeichnet, dass** die mit der Stecknuss (30) des Montagewerkzeuges zusammenwirkenden Führungsnasen (18b, 20c) der Sicherungsbolzen (18) und des Sperrschiebers (20) so ausgerichtet sind, dass bei Aufstecken der Stecknuss (30) vor einem Drehschluss mit der Zentralmutter (12) zuerst der Sperrschieber (20) und dann der Sicherungsbolzen (18) radial nach innen in Entriegelungsstellung verlagert werden.

## Claims

1. Locking device for a central nut (12) of a wheel fastening, in particular for competition vehicles, having a guide part (14) which can be plugged into a tubular outer portion (10a) of the wheel hub (10) and in which is arranged at least one radially displaceable locking bolt (18) which is preloaded in the outward direction, so as to protrude through a recess (10b) in the wheel hub (10), by means of a compression spring (22), wherein the locking bolt (18) engages over the annular end side of the central nut (12) when the latter has been screwed on, **characterized in that** a blocking means (20) which interacts with the locking bolt (18) is provided in the guide part (14), which blocking means (20) blocks an inward displacement of the locking bolt (18).

2. Locking device according to Claim 1, **characterized in that** the blocking means is formed by a blocking slide (20) which is displaceable in the guide part (14) transversely with respect to the locking bolt (18) and which engages behind the at least one locking bolt (18) in the deployed position.

3. Locking device according to either of Claims 1 and 2, **characterized in that** the blocking slide (20) projects with a guide lug (20c) through a further recess (10c) in the wheel hub (10), and preferably the blocking slide (20) is preloaded in the radially outward direction by means of a compression spring (24).

4. Locking device according to one of the preceding claims, **characterized in that** two locking bolts (18) are provided in a diametrically opposed arrangement, and **in that** the blocking slide (20) positioned in between has machined therein a slot-shaped aperture (20b) into which the locking bolts (18) can travel when the blocking slide (20) is in the unlocked position, whereas said locking bolts (18), in the locking position, bear against edge regions (20ba) of the blocking slide (20).

5. Locking device according to one of the preceding claims, **characterized in that** the guide part is formed by a closure cap (14) which can be inserted into the tubular outer portion (10a) of the wheel hub (10) and which closes off the latter to the outside.

6. Locking device according to one of the preceding claims, **characterized in that** the locking bolt (18) and/or the locking slide (20) are displaceably guided directly in the guide part (14) and project with their guide lugs (18b, 20c) through the recesses (10b, 10c), which are formed with a greater amount of circumferential play, in the wheel hub (10).

7. Locking device according to Claim 5 or 6, **characterized in that** the closure cap (14), on the outer circumference thereof, is held by means of a plurality of circumferentially offset, resiliently outwardly preloaded arresting pins (28) in corresponding recesses (10d) in the wheel hub (10).

8. Locking device according to one of the preceding claims, **characterized in that** a free end side (18c) of the locking bolt (18) is of ramp-shaped design such that, when a socket (30) of a fitting tool is pushed on, the locking bolt (18) is displaced radially inward counter to the force of the compression spring (22) and releases the central nut (12).

9. Locking device according to Claim 8, **characterized in that**, when the socket (30) of the fitting tool is pushed on, the blocking means (20) releases the locking bolt (18).

10. Locking device according to one of Claims 3 to 9, **characterized in that** the guide lug (20c) of the blocking slide (20) has a ramp-shaped end side (20d) which interacts with the socket (30).

11. Locking device according to Claim 10, **characterized in that** the guide lugs (18b, 20c), which interact with the socket (30) of the fitting tool, of the locking bolt (18) and of the blocking slide (20) are aligned such that, when the socket (30) is pushed on, before the latter enters into rotational engagement with the central nut (12), firstly the blocking slide (20) and then the locking bolt (18) are displaced radially inwards into the unlocking position.

## Revendications

1. Dispositif de sécurisation pour un écrou central (12) de fixation de roue, notamment pour des véhicules de compétition, avec une partie de guidage (14) pouvant être insérée dans une section extérieure (10a) en forme de tube du moyeu de roue (10) et dans laquelle on trouve au moins un goujon de sécurisation (18) pouvant être déplacé dans le plan radial, ledit goujon étant précontraint de façon saillante vers l'extérieur à travers un évidement (10b) placé dans le moyeu de roue (10) à l'aide d'un ressort de pression (22), le goujon de sécurisation (18) engrenant, lorsque l'écrou central (12) est vissé, son côté avant de forme annulaire, **caractérisé en ce qu'**un moyen de blocage (20) interagissant avec le goujon de sécurisation (18) est prévu dans la partie de guidage (14), ledit moyen empêchant tout coulissement du goujon de sécurisation (18) vers l'intérieur.

2. Dispositif de sécurisation selon la revendication 1, **caractérisé en ce que** le moyen de blocage est formé par un élément poussoir bloquant (20) pouvant être déplacé dans la partie de guidage (14) transversalement par rapport au goujon de sécurisation (18) et engrenant par l'arrière l'au moins un goujon de sécurisation (18) dans la position sortie.

3. Dispositif de sécurisation selon l'une quelconque des revendications 1 ou 2, **caractérisé en ce que** l'élément poussoir bloquant (20) ressort, avec un bec de guidage (20c), à travers un autre évidement (10c) prévu dans le moyeu de roue (10) et que l'élément poussoir bloquant (20) est de préférence précontraint vers l'extérieur dans le plan radial à l'aide d'un ressort de pression (24).

4. Dispositif de sécurisation selon l'une quelconque des revendications précédentes, **caractérisé en ce que** deux goujons de sécurisation (18) sont prévus de façon diamétralement opposée et qu'un passage traversant (20b) en forme de trou oblong est réalisé dans l'élément poussoir bloquant (20) interposé, les goujons de sécurisation (18) pouvant être introduits dans ledit passage en présence d'une position déverrouillée de l'élément poussoir bloquant (20) tandis qu'ils reposent contre les zones de bordure (20ba) de l'élément poussoir bloquant (20) dans la position verrouillée.

5. Dispositif de sécurisation selon l'une quelconque des revendications précédentes, **caractérisé en ce que** la partie de guidage est formée par un cache de fermeture (14) pouvant être inséré dans la section extérieure (10a) en forme de tube du moyeu de roue (10) et pouvant verrouiller celle-ci vers l'extérieur.

6. Dispositif de sécurisation selon l'une quelconque des revendications précédentes, **caractérisé en ce que** le goujon de sécurisation (18) et/ou l'élément poussoir bloquant (20) sont guidés de façon coulissante directement dans la partie de guidage (14) et traversent, avec leurs becs de guidage (18b, 20c), les évidements (10b, 10c) prévus dans le moyeu de roue (10) qui présentent un jeu plus important en périphérie.

7. Dispositif de sécurisation selon la revendication 5 ou 6, **caractérisé en ce que** le cache de fermeture (14) est maintenu au niveau de sa périphérie extérieure dans les évidements (10d) correspondants prévus dans le moyeu de roue (10) à l'aide de plusieurs tenons d'arrêt (28) décalés dans leur périphérie et précontraints vers l'extérieur à la façon d'un ressort.

8. Dispositif de sécurisation selon l'une quelconque des revendications précédentes, **caractérisé en ce qu'**un côté avant (18c) libre du goujon de sécurisation (18) est réalisé de telle sorte en forme de rampe qu'en cas de poussée d'une calotte d'enfichage (30) d'un outil de montage des goujons de sécurisation (18) à l'encontre de la force, le ressort de pression (22) est poussé vers l'intérieur dans le plan radial et libère l'écrou central (12).

9. Dispositif de sécurisation selon la revendication 8, **caractérisé en ce que** le moyen de blocage (20) libère le goujon de sécurisation (18) lorsque la calotte d'enfichage (30) de l'outil de montage est enfichée.

10. Dispositif de sécurisation selon l'une quelconque des revendications 3 à 9, **caractérisé en ce que** le bec de guidage (20c) de l'élément poussoir bloquant (20) présente un côté avant (20d) en forme de rampe qui interagit avec la calotte d'enfichage (30).

11. Dispositif de sécurisation selon la revendication 10, **caractérisé en ce que** les becs de guidage (18b, 20c) des goujons de sécurisation (18) et de l'élément poussoir bloquant (20) interagissant avec la calotte d'enfichage (30) de l'outil de montage sont orientés de telle sorte que lorsque la calotte d'enfichage (30) est enfichée avec l'écrou central (12) avant fermeture par rotation, l'élément poussoir bloquant (20) d'abord puis le goujon de sécurisation (18) sont déplacés vers l'intérieur dans le plan radial dans la position déverrouillée.
